# EUROPÄISCHE PATENTSCHRIFT

(11) **EP 4 244 561 B1**
(45) Veröffentlichungstag und Bekanntmachung des Hinweises auf die Patenterteilung: **24.07.2024**
(21) Anmeldenummer: 21806266.9
(22) Anmeldetag: 09.11.2021
(51) Int. Cl.: F27B 7/22, F16C 13/04, F26B 11/02, F16C 13/02

(54) **ROTIERBARE TROMMEL, INSBESONDERE EIN DREHROHROFEN MIT EINEM DREHROHR UND EINEM UM DIESEN HERUM ANGEORDNETEN LAUFRING**
ROTARY DRUM, IN PARTICULAR A ROTARY KILN WITH A ROTARY TUBE AND A RUNNING RING ARRANGED ABOUT SAME
TAMBOUR ROTATIF, EN PARTICULIER FOUR ROTATIF À TUBE ROTATIF ET BAGUE DE ROULEMENT DISPOSÉE AUTOUR DE CELUI-CI

(30) Priorität: 10.11.2020 BE 202005803; 10.11.2020 DE 102020129532
(43) Veröffentlichungstag der Anmeldung: 20.09.2023
(73) Patentinhaber: thyssenkrupp Polysius GmbH, 59269 Beckum (DE); thyssenkrupp AG, 45143 Essen (DE)
(72) Erfinder: DREPPER, Michael, 48143 Münster (DE)
(74) Vertreter: thyssenkrupp Intellectual Property GmbH
(86) Internationale Anmeldenummer: PCT/EP2021/081123
(87) Internationale Veröffentlichungsnummer: WO 2022/101208

(56) Entgegenhaltungen:
- DE-A1- 3 801 231

## Beschreibung

Die Erfindung betrifft eine Trommel zur Bearbeitung von Materialien wie mineralisches Schüttgut. Die Trommel weist einen Trommelmantel mit einem um diesen herum angeordneten Laufring zur Lagerung der Trommel. Die Erfindung betrifft auch ein Verfahren zum Herstellen einer solchen Trommel.

Rotierbare Trommeln zur Bearbeitung von Materialien sind aus einer Vielzahl von Anwendungen bekannt. Beispielsweise werden rotierbare Trommeln bei Drehrohröfen, Mahlanlagen oder Siebeinrichtungen eingesetzt. Aus der DE 38 01 231 A1 ist bereits ein Drehrohrofen mit einer Anordnung des Laufrings um das Drehrohr herum bekannt. Im Betrieb eines Drehrohrofens entstehen beim Brennen von Rohmehl zu Klinker innerhalb des Drehrohrs sehr hohe Temperaturen, die zu einer Wärmeausdehnung des Ofenmantels führen. Um eine solche Änderung des Drehrohrdurchmessers zu berücksichtigen, ist der Laufring üblicherweise über eine bewegbare Verbindungsanordnung mit dem Drehrohrofen verbunden, die wiederum stoffschlüssig mittels Schweißen mit dem Drehrohrofen selbst verbunden ist. Die thermische Ausdehnung des Ofenmantels führt zu einer hohen Belastung dieser Verbindungsschweißnaht zwischen Verbindungsanordnung und Drehrohrofen. Zusätzlich ist diese Schweißnaht mechanischen Belastungen ausgesetzt.

Daher werden hohe Anforderungen an die Ausführung sowie die Prüfung dieser Schweißnähte gestellt, die mit einem großen Aufwand verbunden sind. Trotzdem können Risse in diesen Schweißnähten während des Betriebes auftreten und somit die Betriebssicherheit gefährden.

Davon ausgehend ist es Aufgabe der vorliegenden Erfindung, eine rotierbare Trommel, wie einen Drehrohrofen bereitzustellen, der die thermische Ausdehnung des der Trommel ermöglicht ohne die Betriebssicherheit zu gefährden.

Diese Aufgabe wird erfindungsgemäß durch eine Trommel mit den Merkmalen des unabhängigen Vorrichtungsanspruchs 1 und durch ein Verfahren zum Herstellen einer rotierbaren Trommelgemäß dem unabhängigen Anspruch 11 gelöst. Vorteilhafte Weiterbildungen ergeben sich aus den abhängigen Ansprüchen.

Eine umfasst nach einem ersten Aspekt eine rotierbare Trommel zur Bearbeitung von Materialien, insbesondere Schüttgut, aufweisend einen Trommelmantel, einen umfangsmäßig um den Trommelmantel angeordneten Laufring zur Lagerung der Trommel, wobei der Laufring auf seiner radial nach innen weisenden Fläche eine Mehrzahl von Vorsprüngen aufweist, die mit an dem Trommelmantel angebrachten Befestigungselementen zusammenwirken, wobei der Trommelmantel eine Mehrzahl von Aussparungen aufweist und wobei in einer Aussparung jeweils ein Befestigungselement angebracht ist. Bei der Trommel handelt es sich beispielsweise um einen Drehrohrofen mit einem Drehrohr zum Brennen von Zementklinker oder um ein Sieb, wie beispielsweise ein Trommelsieb zur Klassierung von mineralischen Materialien oder um eine Mahleinrichtung, wie beispielsweise eine Kugelmühle oder eine Trommelmühle zur Zerkleinerung von mineralischen Materialien. Bei den zu bearbeitenden Materialien handelt es sich beispielsweise um Zementklinker, Rohmehl oder mineralische Gesteine, wie Kalkstein, die insbesondere grobstückig sind. Die Trommel ist vorzugsweise um ihre in Längsrichtung verlaufende Mittelachse rotierbar.

Beispielsweise umfasst ein Drehrohrofen zum Brennen von Zementklinker einen Ofenmantel, einen umfangsmäßig um den Ofenmantel angeordneten Laufring zur Lagerung des Drehrohrofens, wobei der Laufring auf seiner radial nach innen weisenden Fläche eine Mehrzahl von Vorsprüngen aufweist, die mit an dem Ofenmantel angebrachten Befestigungselementen zusammenwirken. Der Ofenmantel weist vorzugsweise eine Mehrzahl von Aussparungen auf, wobei in einer Aussparung jeweils ein Befestigungselement angebracht ist.

Eine Trommel, insbesondere ein Drehrohrofen weist vorzugsweise ein Drehrohr auf, das um seine Mittellängsachse rotierbar angebracht ist. Die Trommel, insbesondere der Drehrohrofen weist vorzugsweise einen Materialeinlass zum Einlassen von beispielsweise Rohmehl und einen Materialauslass zu Auslassen von beispielsweise gebranntem Zementklinker auf. Vorzugsweise sind der Materialeinlass und der Materialauslass an gegenüberliegenden Enden des Drehrohrs angeordnet, wobei zu schwerkraftbedingten Transport des zu brennenden Materials das Drehrohr von dem Materialeinlass zu dem Materialauslass geneigt angeordnet ist. Die Trommel, insbesondere das Drehrohr der Trommel umfasst vorzugsweise einen Trommelmantel, der insbesondere rohrförmig ausgebildet ist und die äußere Mantelfläche des Drehrohrs ausbildet. Das Drehrohr des Drehrohrofens umfasst vorzugsweise einen Ofenmantel, der insbesondere rohrförmig ausgebildet ist und die äußere Mantelfläche des Drehrohrs ausbildet. Radial einwärts des Ofenmantels ist beispielsweise eine feuerfeste Verkleidung angebracht. Im Inneren des Drehrohrs ist vorzugsweise der Brennraum des Drehrohrofens ausgebildet, der insbesondere von der feuerfesten Verkleidung umschlossen wird.

Der ringförmige Laufring ist vorzugsweise in Umfangsrichtung um das Drehrohr herum angeordnet und dient insbesondere der zur Lagerung des rotierenden Drehrohrs. Der Laufring ist vorzugsweise derart angeordnet, dass er auf einer Lagerrolle abrollt. Der Laufring ist vorzugsweise koaxial zu dem Drehrohr angeordnet und weist einen größeren Durchmesser als das Drehrohr auf. Vorzugsweise ist zwischen dem Trommelmantel, insbesondere dem Ofenmantel, und dem Laufring, insbesondere der Innenfläche des Laufrings, ein Spalt ausgebildet.

Der Laufring weist insbesondere an seiner radial nach innen weisenden Fläche eine Mehrzahl von Vorsprüngen auf. Die Vorsprünge erstrecken sich vorzugsweise zumindest teilweise über den Spalt zwischen dem Trommelmantel, insbesondere dem Ofenmantel und der Innenseite des Laufrings. Beispielsweise sind die Vorsprünge zahnförmig ausgebildet. Insbesondere erstrecken sich die Vorsprünge über die gesamte Breite des Laufrings. Vorzugsweise sind die Vorsprünge einstückig mit dem Laufring ausgebildet oder mit diesem verschweißt. Insbesondere sind die Vorsprünge im Wesentlichen gleichmäßig zueinander beabstandet in Umfangsrichtung angeordnet und beispielsweise identisch ausgebildet.

In dem Trommelmantel, insbesondere dem Ofenmantel, sind vorzugsweise eine Mehrzahl von Aussparungen angeordnet, die sich beispielweise vollständig oder teilweise durch den Trommelmantel erstrecken. Jedes Befestigungselement ist vorzugsweise in jeweils genau einer Aussparung angebracht. Es ist ebenfalls denkbar, dass in einer Aussparung eine Mehrzahl von Befestigungselementen, beispielsweise zwei, drei oder vier Befestigungselemente, angebracht sind.

Die Anordnung der Befestigungselemente in jeweils einer Aussparung vereinfacht die Anbringung der Befestigungselemente an dem Trommelmantel und ermöglicht eine Einleitung der über das Befestigungselement aufgenommen Kräfte auf dem gesamten Querschnitt in den Trommelmantel.

Gemäß einer ersten Ausführungsform ist das Befestigungselement formschlüssig mit dem Trommelmantel, insbesondere dem Ofenmantel verbunden. Vorzugsweise ist das Befestigungselement formschlüssig in der jeweiligen Aussparung in dem Trommelmantel aufgenommen. Die Aussparung ist beispielsweise viereckig ausgebildet, wobei das Befestigungselement zumindest einen Bereich aufweist, der die gleiche Geometrie wie die Aussparung aufweist. Eine formschlüssige Verbindung ist vergleichsweise einfach herstellbar und ermöglicht eine Einleitung von hohen, beispielsweise in Umfangsrichtung des Drehrohrs wirkenden, Kräften.

Gemäß einer weiteren Ausführungsform ist das Befestigungselement stoffschlüssig mit dem Trommelmantel, insbesondere dem Ofenmantel verbunden, insbesondere verschweißt. Bei der Schweißnaht handelt es sich beispielsweise um eine I-Schweißnaht. Zusammen mit der formschlüssigen Verbindung sorgt die Schweißnaht für eine optimale Verbindung des Befestigungselements mit dem Trommelmantel, wobei hohe Kräfte, beispielsweise durch die formschlüssige Verbindung, aufgenommen werden und die Schweißnaht nur eine positionshaltende Funktion einnimmt. Auch bei thermische Spannungen birgt eine solche Verbindung eine hohe Betriebssicherheit.

Gemäß einer weiteren Ausführungsform weist das Befestigungselement einen innerhalb der Aussparung angeordneten Basisbereich und einen radial aus dem Trommelmantel, insbesondere dem Ofenmantel hervorstehenden Aufnahmebereich auf. Vorzugsweise ist das Befestigungselement einstückig ausgebildet. Der Basisbereich ist insbesondere radial einwärts des Aufnahmebereichs angeordnet. Der Aufnahmebereich weist beispielsweise die gleiche Höhe auf, wie der Basisbereich. Insbesondere weist das Befestigungselement eine Höhe auf, die in etwa doppelt so groß wie die Tiefe der Aussparung ist. Aufnahmebereich dient vorzugsweise der Aufnahme des Vorsprungs des Laufrings, insbesondere einer zwischen dem Vorsprung und dem Befestigungselement angeordneten Verbindungsanordnung. Der Basisbereich ist vorzugsweise fluchtend mit der Oberfläche des Trommelmantels, insbesondere des Ofenmantels angeordnet.

Gemäß einer weiteren Ausführungsform weist der Basisbereich die Geometrie der Aussparung und der Aufnahmebereich eine davon abweichende oder identische Geometrie auf. Zwischen dem Basisbereich und der Aussparung wird vorzugsweise ein Formschluss ausgebildet, der insbesondere durch einen Stoffschluss unterstützt wird.

Gemäß einer weiteren Ausführungsform weist der Aufnahmebereich die Form eines Doppelkeils auf. Insbesondere ist der Aufnahmebereich als Quader ausgebildet, wobei die in axialer Richtung des Drehrohrs weisenden Seitenflächen nach innen gewölbt, vorzugsweise konkav, ausgebildet sind. Die in Umfangsrichtung des Drehrohrs weisenden Flächen des Aufnahmebereichs sind insbesondere leicht nach außen gewölbt, konvex, ausgebildet.

Gemäß einer weiteren Ausführungsform sind die Aussparungen in einer Mehrzahl von umfangsmäßigen Reihen angeordnet sind. Vorzugsweise sind die Reihen koaxial zu dem Drehrohr und parallel zueinander angeordnet. Die Aussparungen sind beispielsweise gleichmäßig zueinander beabstandet.

Gemäß einer weiteren Ausführungsform ist der Vorsprung des Laufrings über eine Verbindungsanordnung mit zumindest einem Befestigungselement des Trommelmantels, insbesondere des Ofenmantels, vorzugsweise kraftschlüssig verbunden, sodass eine Rotationsbewegung des Trommelmantels auf den Laufring übertragen wird. Die Verbindungsanordnung ist vorzugsweise zumindest teilweise relativ zu dem Trommelmantel und/ oder dem Laufring bewegbar angebracht. Eine Verbindungsanordnung umfasst beispielshaft einen an dem Vorsprung anliegenden Keil, der in axialer Richtung des Drehrohrs beispielsweise mittels einer federbeaufschlagten Spanneinrichtung bewegbar ist. Die Verbindungsanordnung umfasst beispielsweise eine sich in Umfangsrichtung an den Keil anschließende Stützplatte. Die Stützplatte erstreckt sich vorzugsweise zwischen zwei gegenüberliegenden Befestigungselementen, vorzugsweise der Aufnahmebereiche der Befestigungselemente unterschiedlicher Reihen und stützt sich an diesen ab. Zusätzlich ist die Stützplatte vorzugsweise mittels einer Axialbefestigung gegen eine Bewegung in axialer Richtung des Drehrohrs gesichert. An jedem Vorsprung liegen vorzugsweise jeweils in Umfangsrichtung des Drehrohrs zwei Verbindungsanordnungen an, die den Vorsprung mit den Befestigungselementen, insbesondere vier Befestigungselementen, verbindet.

Gemäß einer weiteren Ausführungsform ist die Verbindungsanordnung zumindest teilweise relativ zu dem Trommelmantel, insbesondere dem Ofenmantel und/ oder dem Laufring bewegbar angebracht. Die Verbindungsanordnung ermöglicht eine Relativbewegung zwischen dem Drehrohr und dem Laufring, sodass eine thermische Ausdehnung des Trommelmantels möglich ist ohne den Laufring zu verformen.

Die Erfindung umfasst auch ein Verfahren zur Montage einer Trommel, insbesondere eines Drehrohrofens mit einem Drehrohr und einem um das Drehrohr herum angeordneten Laufring, aufweisend zumindest die folgenden Schritte:
- Einbringen von Aussparungen in den Trommelmantel des Drehrohrs,
- Einsetzen von jeweils einem plattenförmigen Befestigungselement in die jeweilige Aussparung,
- Optional Stoffschlüssiges Verbinden des Befestigungselementes mit dem Trommelmantel,
- Materialabhebendes Bearbeiten des in der Aussparung angeordneten Befestigungselements und
- Anbringen des Laufrings um den äußeren Umfang des Drehrohrs.

Die mit Bezug auf die Trommel, insbesondere den Drehrohrofen beschriebenen Ausführungen und Vorteile treffen in verfahrensgemäßer Entsprechung auch auf das Verfahren zur Montage der Trommel, insbesondere des Drehrohrofens zu. Bei der Montage eines Drehrohrofens erfolgt das Einbringen von Aussparungen in den Ofenmantel des Drehrohrs und das Befestigungselement wird optional stoffschlüssig mit dem Ofenmantel verbunden.

Vorzugsweise erstreckt sich die Aussparung vollständig oder teilweise durch den Trommelmantel. Bei dem materialabhebenden Bearbeiten handelt es sich beispielsweise um Fräsen und/ oder Schleifen.

Gemäß einer weiteren Ausführungsform wird das plattenförmige Befestigungselement formschlüssig und/ oder stoffschlüssig mit dem Trommelmantel, insbesondere dem Ofenmantel verbunden. Die Breite und die Länge des plattenförmigen Befestigungselements entsprechen vorzugsweise der Breite und der Länge der Aussparung. Zusätzlich wird das Befestigungselement vorzugsweise stoffschlüssig mit dem Trommelmantel, insbesondere dem Ofenmantel verbunden.

Gemäß einer weiteren Ausführungsform wird das plattenförmige Befestigungselement derart in die Aussparung eingesetzt, dass es zumindest teilweise aus dem Trommelmantel, insbesondere dem Ofenmantel hervorsteht. Vorzugsweise steht ausschließlich der Aufnahmebereich aus dem Trommelmantel hervor, wobei der Basisbereich vorzugweise vollständig innerhalb der Aussparung angeordnet ist.

Gemäß einer weiteren Ausführungsform wird der aus dem Trommelmantel, insbesondere dem Ofenmantel hervorstehende Bereich des Befestigungselements materialabhebend bearbeitet, insbesondere gefräst und/ oder geschliffen.

### Beschreibung der Zeichnungen

Die Erfindung ist nachfolgend anhand mehrerer Ausführungsbeispiele mit Bezug auf die beiliegenden Figuren näher erläutert. Die Ausführungsbeispiele beziehen sich beispielhaft auf eine rotierbare Trommel, die als Drehrohrofen ausgestaltet ist. Es ist ebenfalls denkbar, dass es sich bei der rotierbaren Trommel um ein Sieb oder eine Mahleinrichtung handelt, wobei die Trommel eines Trommelsiebes oder die Trommel einer Kugelmühle wie in den folgenden auf den Drehrohrofen gerichteten Ausführungsbeispielen ausgestaltet ist.
Fig. 1 zeigt eine schematische Darstellung eines Ausschnitts eines Drehrohrofens in einer perspektivischen Ansicht gemäß einem Ausführungsbeispiel.
Fig. 2 zeigt eine schematische Darstellung eines Ausschnitts eines Ofenmantels in einer perspektivischen Ansicht gemäß einem Ausführungsbeispiel
Fig. 3 zeigt eine schematische Darstellung eines Befestigungselements in einer Draufsicht gemäß einem Ausführungsbeispiel.
Fig. 4 zeigt eine schematische Darstellung eines Befestigungselements in einer Schnittansicht gemäß einem Ausführungsbeispiel.

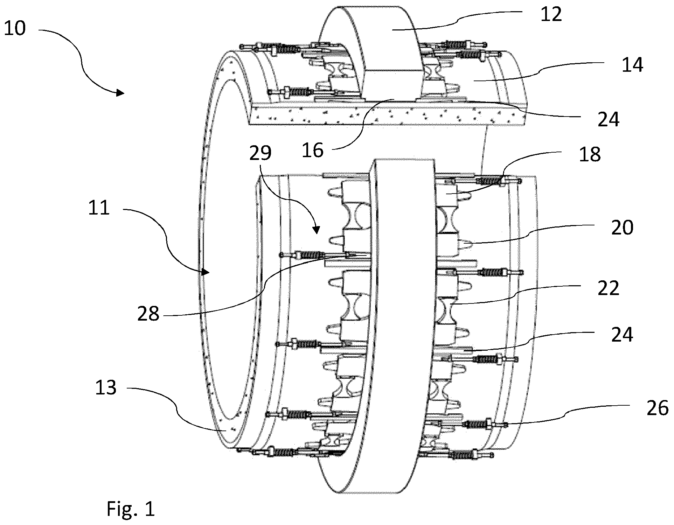

In Fig. 1 ist ein Ausschnitt eines Drehrohrofens 10 mit einem Drehrohr 11 gezeigt. Der Drehrohrofen 10 weist vorzugsweise einen in Fig. 1 nicht dargestellten Materialeinlass zum Einlassen von beispielsweise Rohmehl und einen Materialauslass zu Auslassen von beispielsweise gebranntem Zementklinker auf. Der Materialeinlass und der Materialauslass sind an gegenüberliegenden Enden des Drehrohrs 11 angeordnet, wobei das Drehrohr von dem Materialeinlass zu dem Materialauslass geneigt angeordnet ist, sodass das zu brennende Material innerhalb des Drehrohrs schwerkraftbedingt von dem Materialeinlass zu dem Materialauslass bewegt wird. Das Drehrohr ist um seine Mittelachse rotierbar angebracht und umfasst einen Ofenmantel 14, der rohrförmig ausgebildet ist und die äußere Mantelfläche des Drehrohrs 11 ausbildet. Radial einwärts des Ofenmantels 14 ist eine feuerfeste Verkleidung 13 angebracht. Im Inneren des Drehrohrs 11 ist der Brennraum des Drehrohrofens 10 ausgebildet, in dem vorzugsweise vorgewärmtes Rohmehl zu Klinker gebrannt wird.

In Umfangsrichtung um das Drehrohr herum ist ein Laufring 12 angeordnet, der zur Lagerung des rotierenden Drehrohrs 11 dient. Der Laufring 12 ist vorzugsweise derart angeordnet, dass er auf einer nicht dargestellten Lagerrolle abrollt. Der Laufring 12 ist ringförmig ausgebildet, koaxial zu dem Drehrohr 11 angeordnet und weist einen größeren Durchmesser als das Drehrohr 11 auf. Vorzugsweise ist zwischen dem Ofenmantel 14 und dem Laufring 12, insbesondere der Innenfläche des Laufrings 12, ein Spalt ausgebildet. An seiner radial nach innen weisenden Fläche weist der Laufring 12 eine Mehrzahl von Vorsprüngen 16 auf, die beispielhaft in axialer Richtung über die gesamte Breite des Laufrings verlaufen. Vorzugsweise sind die Vorsprünge 16 einstückig mit dem Laufring 12 ausgebildet oder mit diesem verschweißt. Die Vorsprünge 16 erstrecken sich vorzugsweise zumindest teilweise über den Spalt zwischen dem Ofenmantel 14 und der Innenseite des Laufrings 12. Insbesondere sind die Vorsprünge 16 im Wesentlichen gleichmäßig zueinander beabstandet in Umfangsrichtung angeordnet und beispielsweise identisch ausgebildet.

Der Ofenmantel 14 weist eine Mehrzahl von Befestigungselementen 22 auf, die mit dem Ofenmantel 14 fest verbunden sind und mit den Vorsprüngen 16 des Laufrings 12 zusammenwirken. In dem Ofenmantel 14 sind eine Mehrzahl von Aussparungen 30 angeordnet, die sich beispielweise vollständig oder teilweise durch den Ofenmantel 14 erstrecken. In einer Aussparung ist jeweils ein Befestigungselement 22 angebracht und insbesondere formschlüssig mit dem Ofenmantel 14 verbunden. Zusätzlich ist das Befestigungselement 22 optional mit dem Ofenmantel 14 verschweißt. Die Verschweißung erfolgt beispielsweise mittels einer I-Schweißnaht.

Im Betrieb des Drehrohrofens 10 rotiert das Drehrohr 11 um seine Mittelachse, wobei die Rotation über die Befestigungselemente 22 des Ofenmantels 14 an die Vorsprünge 16 des Laufrings 12 übertragen werden. Vorzugsweise sind die Befestigungselemente 22 umfangsmäßig in zwei parallelen Reihen über den gesamten Umfang des Drehrohrs 11 angeordnet. Die beiden Reihen von Befestigungselementen 22 sind zueinander beabstandet, wobei mittig zwischen den Reihen von Befestigungselementen 22 und oberhalb dieser der Laufring 12 angeordnet ist. Die Vorsprünge 16 des Laufrings 12 sind jeweils mittig zwischen zwei Befestigungselementen 22 und in Umfangsrichtung zu diesen versetzt angeordnet. In axialer Richtung stützen sich die Vorsprünge 16 jeweils an einer Axialbefestigung 24 ab, um eine Bewegung des Laufrings 12 in axialer Richtung zu verhindern.

Jeder Vorsprung 16 ist über eine Verbindungsanordnung 29 mit zwei Befestigungselementen 22 verbunden. Die Verbindungsanordnung 29 ist vorzugsweise zumindest teilweise relativ zu dem Ofenmantel 14 und/ oder dem Laufring 12 bewegbar angebracht. Eine Verbindungsanordnung 29 umfasst beispielshaft einen Keil 28, der in Umfangsrichtung an dem Vorsprung 16 anliegt und in axialer Richtung des Drehrohrs 11 bewegbar ist. Der Keil 28 ist mittels einer federbeaufschlagten Spanneinrichtung 26 an dem Ofenmantel 14 angebracht und in Richtung des Vorsprungs 16 zulaufend ausgebildet. Über die Spanneinrichtung 26 wird der Keil 28 in axialer Richtung des Drehrohrs 11 mit einer Federkraft beaufschlagt. An den Keil 28 schließt sich in Umfangsrichtung eine Stützplatte 18 an, die plattenförmig ausgebildet und an ihren in axialer Richtung weisenden Seiten verjüngt ist. Die Stützplatte 18 erstreckt sich vorzugsweise zwischen zwei gegenüberliegenden Befestigungselementen 22 unterschiedlicher Reihen und stützt sich an diesen ab. Mit den verjüngten Seiten liegt die Stützpatte 18 jeweils an einem Befestigungselement 22 an und ist zusätzlich mittels einer Axialbefestigung 20 gegen eine Bewegung in axialer Richtung des Drehrohrs gesichert. Die Stützplatte 18 ist vorzugsweise relativ zu dem Laufring 12 und dem Ofenmantel 14 bewegbar angebracht, sodass bei einer Ausdehnung des Ofenmantels 14 eine Bewegung der Stützplatte 18, insbesondere in Umfangsrichtung möglich ist.

An jedem Vorsprung 16 liegen vorzugsweise jeweils in Umfangsrichtung des Drehrohrs 11 zwei Verbindungsanordnungen 29 an, die den Vorsprung 16 mit jeweils vier der Befestigungselemente 22 verbindet.

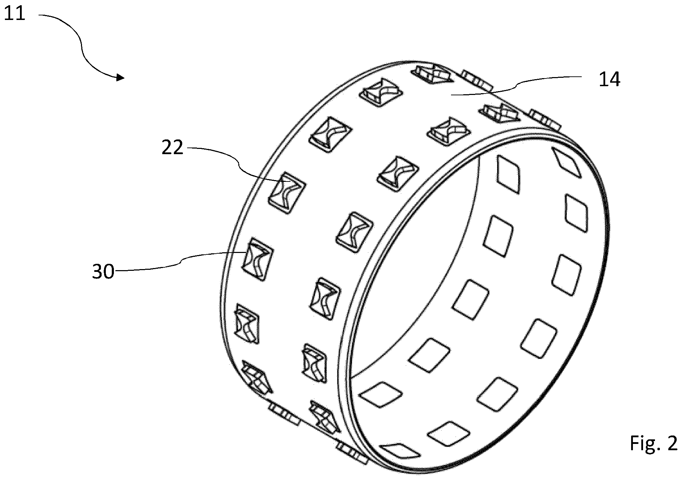

Fig. 2 zeigt einen Ausschnitt des Drehrohrs 11 mit einer Mehrzahl von Befestigungselementen 22. Die Befestigungselemente 22 sind jeweils in einer Aussparung 30 in dem Ofenmantel 14 des Drehrohrs 11 angeordnet. Vorzugsweise erstreckt sich die Aussparung 30 über die gesamte Dicke des Ofenmantels 14. Die Breite und die Länge des Befestigungselements 22 entspricht vorzugsweise im Wesentlichen der Breite und der Länge der Aussparung 30, sodass das Befestigungselement 22 formschlüssig in der Aussparung 30 angeordnet ist. Das Befestigungselement 22 ist vorzugsweise derart innerhalb der Aussparung 30 angeordnet, dass zumindest ein Teil des Befestigungselements 22 in radialer Richtung nach außen aus dem Ofenmantel 14 hervorsteht. Die Befestigungselemente 22 sind beispielhaft alle identisch ausgebildet und in zwei parallelen koaxialen Reihen nebeneinander angeordnet.

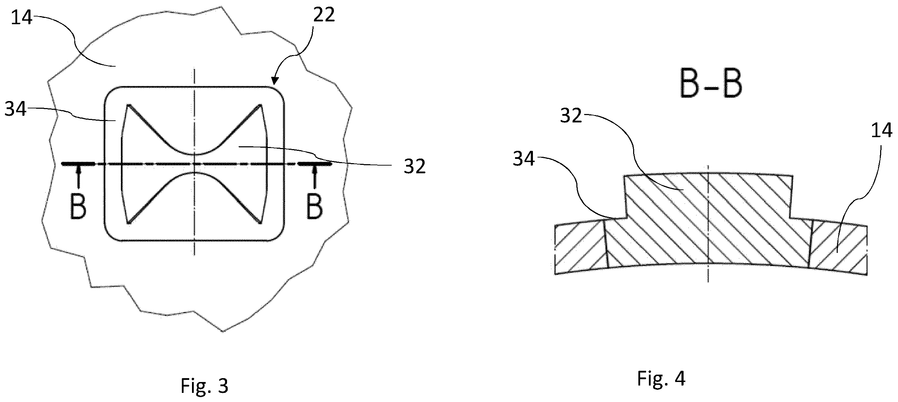

Fig. 3 und 4 zeigen ein Befestigungselement 22. Das Befestigungselement 22 weist beispielhaft einen Basisbereich 34 und einen Aufnahmebereich 32 auf. Der Basisbereich 34 ist vorzugsweise innerhalb der Aussparung 30 des Ofenmantels 14 angeordnet und bildet den unteren, radial einwärtigen Bereich, des Befestigungselements 22. Die äußere Geometrie des Basisbereichs 34 entspricht in etwa der Geometrie der Aussparung, sodass der Basisbereich 34 den Formschluss mit dem Ofenmantel 14 ausbildet. Der Aufnahmebereich 32 bildet den radial auswärts weisenden Bereich des Befestigungselements 22 und steht in radialer Richtung nach außen aus dem Ofenmantel 14 hervor. Das Befestigungselement 22 ist vorzugsweise einstückig ausgebildet und insbesondere spanabhebend bearbeitet, beispielsweise gefräst.

Der Aufnahmebereich 32 des Befestigungselements 22 weist zwei in Umfangsrichtung des Drehrohrs 11 weisende Seitenflächen auf, die beispielhaft leicht gewölbt, vorzugsweise konvex ausgebildet sind. Diese Seitenflächen bildet jeweils eine Auflage für die Stützplatte 18 der Verbindungsanordnung 29, wie in Fig. 1 gezeigt. Die in axiale Richtung des Drehrohrs 11 weisenden Seitenflächen sind beispielhaft konkav ausgebildet. Davon abweichende Formen des Aufnahmebereichs 32 sind ebenfalls denkbar. Der Basisbereich 34 ist vorzugsweise mit dem Ofenmantel 14 verschweißt. Vorteilhafterweise ermöglicht die vorangehend beschriebene Anordnung des Befestigungselements 22 eine Nutzung des gesamten Querschnitts des Befestigungselements 22 zur Übertragung der Kraft zwischen dem Drehrohr 11 und dem Laufring 12 während der Rotation des Drehrohrs 11. Die Spannungen innerhalb der Schweißnaht zwischen dem Befestigungselement 22 und dem Ofenmantel 14 sind dabei vergleichsweise gering, sodass das Auftreten von Rissen in der Schweißnaht während des Betriebes verhindert wird.

### Bezugszeichenliste

- 10: Drehrohrofen
- 11: Drehrohr
- 12: Laufring
- 13: feuerfeste Verkleidung
- 14: Ofenmantel
- 16: Vorsprung
- 18: Stützplatte
- 20: Axialbefestigung der Stützplatte
- 22: Befestigungselement
- 24: Axialbefestigung des Laufrings
- 26: Spanneinrichtung
- 28: Keil
- 29: Verbindungsanordnung
- 30: Aussparung
- 32: Aufnahmebereich
- 34: Basisbereich

## Patentansprüche

1. Rotierbare Trommel (10) zur Bearbeitung von Materialien, insbesondere Schüttgut, aufweisend
einen Trommelmantel (14),
einen umfangsmäßig um den Trommelmantel (14) angeordneten Laufring (12) zur Lagerung der Trommel (10), wobei der Laufring (12) auf seiner radial nach innen weisenden Fläche eine Mehrzahl von Vorsprüngen (16) aufweist, die mit an dem Trommelmantel (14) angebrachten Befestigungselementen (22) zusammenwirken,
**dadurch gekennzeichnet, dass**
der Trommelmantel (14) eine Mehrzahl von Aussparungen (30) aufweist und wobei in einer Aussparung jeweils ein Befestigungselement (22) angebracht ist.

2. Trommel (10) nach Anspruch 1, wobei die Trommel (10), ein Drehrohrofen zum Brennen von Zementklinker, eine Mühle zum Mahlen von mineralischem Material oder ein Sieb ist.

3. Trommel (10) nach Anspruch 1 oder 2, wobei das Befestigungselement (22) formschlüssig mit dem Trommelmantel (14) verbunden ist.

4. Trommel (10) nach einem der vorangehenden Ansprüche, wobei das Befestigungselement (22) stoffschlüssig mit dem Trommelmantel (14) verbunden, insbesondere verschweißt ist.

5. Trommel (10) nach einem der vorangehenden Ansprüche, wobei das Befestigungselement (22) einen innerhalb der Aussparung (30) angeordneten Basisbereich (34) und einen radial aus dem Trommelmantel (14) hervorstehenden Aufnahmebereich (32) aufweist.

6. Trommel (10) nach Anspruch 5, wobei der Basisbereich (34) die Geometrie der Aussparung (30) und der Aufnahmebereich (32) eine davon abweichende oder identische Geometrie aufweist.

7. Trommel (10) nach Anspruch 5 oder 6, wobei der Aufnahmebereich (32) die Form eines Doppelkeils aufweist.

8. Trommel (10) nach einem der vorangehenden Ansprüche, wobei die Aussparungen (30) in einer Mehrzahl von umfangsmäßigen Reihen angeordnet sind.

9. Trommel (10) nach einem der vorangehenden Ansprüche, wobei der Vorsprung des Laufrings (12) über eine Verbindungsanordnung (29) mit zumindest einem Befestigungselement (22) des Trommelmantels (14) verbunden ist, sodass eine Rotationsbewegung des Trommelmantels (14) auf den Laufring (12) übertragen wird.

10. Trommel (10) nach einem der vorangehenden Ansprüche, wobei die Verbindungsanordnung (29) zumindest teilweise relativ zu dem Ofenmantel (14) und/ oder dem Laufring (12) bewegbar angebracht ist.

11. Verfahren zur Herstellung einer Trommel (10) mit einem Drehrohr (11) und einem um das Drehrohr (11) herum angeordneten Laufring (12), aufweisend zumindest die folgenden Schritte:
- Einbringen von Aussparungen (30) in den Trommelmantel (14) des Drehrohrs (11),
- Einsetzen von jeweils einem plattenförmigen Befestigungselement (22) in die jeweilige Aussparung (30), materialabhebendes Bearbeiten des in der Aussparung (30) angeordneten Befestigungselements (22) und
- Anbringen des Laufrings (12) um den äußeren Umfang des Drehrohrs (11).

12. Verfahren nach Anspruch 11, wobei das plattenförmige Befestigungselement (22) formschlüssig und/ oder stoffschlüssig mit dem Trommelmantel (14) verbunden wird.

13. Verfahren nach einem der Ansprüche 11 oder 12, wobei das plattenförmige Befestigungselement (22) derart in die Aussparung (30) eingesetzt wird, dass es aus dem Trommelmantel (14) hervorsteht.

14. Verfahren nach Anspruch 13, wobei der aus dem Trommelmantel (14) hervorstehende Bereich des Befestigungselements (22) bearbeitet wird.

## Claims

1. Rotatable drum (10) for processing materials, in particular bulk material, comprising
a drum shell (14),
a bearing ring (12) arranged circumferentially around the drum shell (14) for mounting the drum (10), the bearing ring (12) having a plurality of projections (16) on its radially inwardly facing surface, which projections cooperate with fastening elements (22) attached to the drum shell (14),
**characterized in that**
the drum shell (14) has a plurality of recesses (30) and a fastening element (22) is fitted in each recess.

2. Drum (10) according to claim 1, wherein the drum (10) is a rotary kiln for burning cement clinker, a mill for grinding mineral material or a sieve.

3. Drum (10) according to claim 1 or 2, wherein the fastening element (22) is positively connected to the drum shell (14).

4. Drum (10) according to one of the preceding claims, wherein the fastening element (22) is connected, in particular welded, to the drum shell (14) by a material bond.

5. Drum (10) according to one of the preceding claims, wherein the fastening element (22) has a base region (34) arranged within the recess (30) and a receiving region (32) projecting radially from the drum shell (14).

6. Drum (10) according to claim 5, wherein the base region (34) has the geometry of the recess (30) and the receiving region (32) has a different or identical geometry.

7. Drum (10) according to claim 5 or 6, wherein the receiving region (32) has the shape of a double wedge.

8. Drum (10) according to one of the preceding claims, wherein the recesses (30) are arranged in a plurality of circumferential rows.

9. Drum (10) according to one of the preceding claims, wherein the projection of the running ring (12) is connected to at least one fastening element (22) of the drum shell (14) via a connecting arrangement (29), so that a rotational movement of the drum shell (14) is transmitted to the running ring (12).

10. Drum (10) according to one of the preceding claims, wherein the connecting arrangement (29) is at least partially movably mounted relative to the furnace shell (14) and/or the race (12).

11. A method of manufacturing a drum (10) having a rotary tube (11) and a race (12) arranged around the rotary tube (11), comprising at least the following steps:
- Making recesses (30) in the drum shell (14) of the rotary tube (11),
- Insertion of a respective plate-shaped fastening element (22) into the respective recess (30), material-removing machining of the fastening element (22) arranged in the recess (30) and
- Attach the race (12) around the outer circumference of the rotating tube (11).

12. Method according to claim 11, wherein the plate-shaped fastening element (22) is connected to the drum shell (14) in a form-fitting and/or material-fitting manner.

13. Method according to one of claims 11 or 12, wherein the plate-shaped fastening element (22) is inserted into the recess (30) in such a way that it protrudes from the drum shell (14).

14. Method according to claim 13, wherein the region of the fastening element (22) protruding from the drum shell (14) is machined.

## Revendications

1. Tambour rotatif (10) pour le traitement de matériaux, en particulier de produits en vrac, présentant
une enveloppe de tambour (14),
une bague de roulement (12) disposée sur la circonférence autour de l'enveloppe de tambour (14) pour le montage du tambour (10), la bague de roulement (12) présentant sur sa surface orientée radialement vers l'intérieur une pluralité de saillies (16) qui coopèrent avec des éléments de fixation (22) montés sur l'enveloppe de tambour (14),
**caractérisé en ce que**
l'enveloppe de tambour (14) présente une pluralité d'évidements (30) et un élément de fixation (22) étant respectivement placé dans un évidement.

2. Tambour (10) selon la revendication 1, dans lequel le tambour (10), est un four rotatif pour la cuisson de clinker de ciment, un broyeur pour le broyage de matériau minéral ou un tamis.

3. Tambour (10) selon la revendication 1 ou 2, dans lequel l'élément de fixation (22) est relié par complémentarité de forme à l'enveloppe (14) du tambour.

4. Tambour (10) selon l'une des revendications précédentes, dans lequel l'élément de fixation (22) est relié à l'enveloppe de tambour (14) par liaison de matière, en particulier par soudage.

5. Tambour (10) selon l'une des revendications précédentes, dans lequel l'élément de fixation (22) présente une zone de base (34) disposée à l'intérieur de l'évidement (30) et une zone de réception (32) dépassant radialement de l'enveloppe (14) du tambour.

6. Tambour (10) selon la revendication 5, dans lequel la zone de base (34) présente la géométrie de l'évidement (30) et la zone de réception (32) présente une géométrie différente ou identique à celle-ci.

7. Tambour (10) selon la revendication 5 ou 6, dans lequel la zone de réception (32) présente la forme d'un double coin.

8. Tambour (10) selon l'une quelconque des revendications précédentes, dans lequel les évidements (30) sont disposés en une pluralité de rangées circonférentielles.

9. Tambour (10) selon l'une quelconque des revendications précédentes, dans lequel la saillie de la bague de roulement (12) est reliée à au moins un élément de fixation (22) de la virole (14) du tambour par un agencement de liaison (29), de sorte qu'un mouvement de rotation de la virole (14) du tambour est transmis à la bague de roulement (12).

10. Tambour (10) selon l'une quelconque des revendications précédentes, dans lequel l'ensemble de liaison (29) est monté au moins partiellement mobile par rapport à la virole (14) du four et/ou à la bague de roulement (12).

11. Procédé de fabrication d'un tambour (10) comprenant un tube rotatif (11) et une bague de roulement (12) disposée autour du tube rotatif (11), comprenant au moins les étapes suivantes :
- réalisation d'évidements (30) dans l'enveloppe de tambour (14) du tube rotatif (11),
- mise en place d'un élément de fixation (22) respectif en forme de plaque dans l'évidement (30) respectif, usinage par enlèvement de matière de l'élément de fixation (22) disposé dans l'évidement (30) et
- Mise en place de la bague de roulement (12) autour de la circonférence extérieure du tube rotatif (11).

12. Procédé selon la revendication 11, dans lequel l'élément de fixation (22) en forme de plaque est relié à la virole (14) du tambour par une liaison par la forme et/ou par la matière.

13. Procédé selon l'une des revendications 11 ou 12, dans lequel l'élément de fixation (22) en forme de plaque est inséré dans l'évidement (30) de manière à faire saillie de la virole (14) du tambour.

14. Procédé selon la revendication 13, dans lequel la zone de l'élément de fixation (22) dépassant de l'enveloppe du tambour (14) est usinée.
